# EUROPEAN PATENT APPLICATION

(11) **EP 2 246 848 A1**
(43) Date of publication of application: **03.11.2010**
(21) Application number: 10161257.0
(22) Date of filing: 28.04.2010
(51) Int. Cl.: G11B 5/55, G11B 5/596

(54) **Head stack assembly, hard disk drive comprising the head stack assembly, and method to reduce off-track in the hard disk drive**

(30) Priority: 28.04.2009 KR 20090037110
(71) Applicant: Samsung Electronics Co., Ltd., Suwon-si, Gyeonggi-do (KR)
(72) Inventor: Hong, Eo-jin, Seongnam-si Gyeonggi-do (KR); Kim, Woo-sung, Gangnam-gu Seoul (KR); Song, Yong-han, Yongin-si Gyeonggi-do (KR)
(74) Representative: Grünecker, Kinkeldey, Stockmair & Schwanhäusser Anwaltssozietät

(57) **Abstract**

Provided are a head stack assembly (HSA) with reduced off-track, a hard disk drive including the HSA, and a method of reducing the off-track of the hard disk drive. The HSA includes a swing arm rotatably mounted on a base member of a hard disk drive (HDD); a connecting plate coupled to a front edge of the swing arm; a suspension coupled to the connecting plate to vibrate finely; a pair of hinges disposed on both sides of a center line of the suspension to connect the connecting plate to the suspension; a piezoelectric material layer including a piezoelectric material which is disposed on only one hinge of the pair of hinges, wherein the hinge is closer to a center of a disk in the HDD than the other is; and a head slider that is a recording or reproducing medium of data mounted on the front edge of the suspension.

## Description

### CROSS-REFERENCE TO RELATED APPLICATIONS

This application claims the benefit of Korean Patent Application No. 10-2009-0037110, filed on April 28, 2009, in the Korean Intellectual Property Office, the disclosure of which is incorporated herein in its entirety by reference.

### BACKGROUND

### 1. Field of the Invention

The present general inventive concept relates to a hard disk drive, and more particularly, to a head stack assembly (HSA) having reduced off-track, a hard disk drive including the head stack assembly, and a method of reducing off-track of the hard disk drive.

### 2. Description of the Related Art

A hard disk drive (HDD) is an auxiliary memory device used in computers, MP3 players, or mobile phones, that reads data stored in a disk. During operation of a hard disk drive, the head slider floats a predetermined distance above the disk and reads the data stored in the disk, or writes data into the disk, by using a magnetic head in the head slider to reproduce the data. A head stack assembly supports the head slider by attaching the head slider on a front edge thereof and moves the head slider to a predetermined position on the disk.

When the hard disk drive is physically disturbed or when the head stack assembly accidentally vibrates, the magnetic head may skip from a certain track. A situation in which the magnetic head skips form the track it is supposed to be reading from or writing to is referred to as "off-track."

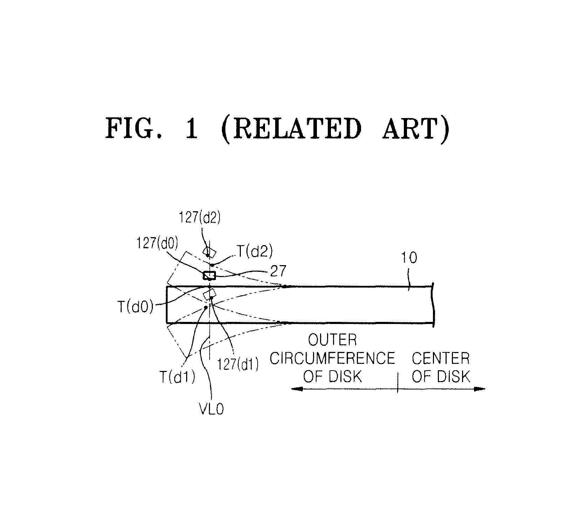

FIG. 1 is a diagram illustrating an off-track caused by disk vibration.

Referring to FIG. 1, when a writing or reading operation is performed, the magnetic head 127(d0) on the head slider 27 and a certain track T(d0) located on a concentric circle about the center of the disk 10 may both be located on a vertical line VL. Since the magnetic head 127(d0) and the track T(d0) are located along the same plane in a horizontal direction, off-track of the head slider 27, or more specifically the magnetic head 127(d0), is 0. When the hard disk drive vibrates, an outer circumference of the disk 10 and the head slider 27 of the head stack assembly vibrate in a vertical direction to cause the magnetic head 127 to move off-track. In particular, when the disk 10 and the head slider 27 vibrate downward, a track T(d1) moves toward the outer circumference of the disk 10 while the magnetic head 127(d1) moves toward the center of the disk 10, causing the magnetic head 127 to move off-track.

In the above example, the element label 127(d0) indicates that the magnetic head 127 is located at a certain distance from the center of the disk 10 in a resting state (d0). When the disk 10 vibrates downward, the magnetic head 127 moves a distance from the center of the disk 10 and is in a first vibration state (d1). The track T(d1) may move due to slight amounts of flexion or expansion of the disk 10 during vibration, for example.

On the other hand, when the disk 10 and the head slider 27 vibrate upward, a track T(d2) moves toward the center of the disk 10 while the magnetic head 127(d2) moves toward the outer circumference of the disk 10, so that the magnetic head is forced off-track. Movement of the track T(d2) may be caused by a slight compression of the disk surface during vibration, for example. A positioning error signal (PES) caused by the off-track adversely affects reliability of data writing/reading qualities of the hard disk drive.

### SUMMARY

The present general inventive concept provides a head stack assembly (HSA) capable of reducing occurrences of off-track, a hard disk drive (HDD) including the head stack assembly, and a method to reduce off-track in the HDD.

Additional aspects and utilities of the present general inventive concept will be set forth in part in the description which follows and, in part, will be obvious from the description, or may be learned by practice of the general inventive concept.

Features and/or utilities of the present general inventive concept may be achieved by a head stack assembly including a swing arm rotatably mounted on a base member of a hard disk drive (HDD), a connecting plate coupled to a front edge of the swing arm, a suspension coupled to the connecting plate to vibrate finely, a pair of hinges disposed on both sides of a center line of the suspension to connect the connecting plate to the suspension, a piezoelectric material layer including a piezoelectric material located on one hinge of the pair of hinges, wherein the hinge having the piezoelectric material is closer to a center of a disk in the hard disk drive than the other hinge, and a head slider mounted on the front edge of the suspension.

When a voltage is applied to the piezoelectric material layer, the piezoelectric material layer may compress the hinge to bend the hinge toward a surface of the disk.

The piezoelectric material layer may be formed by adhering a film including the piezoelectric material on the hinge.

Additional features and/or utilities of the present general inventive concept may be achieved by a hard disk drive including a base member, a disk that is a data storage medium rotating on the base member at a high speed, and the head stack assembly, rotatably mounted to the base member to record data onto the disk or to reproduce data stored in the disk.

The hard disk drive may further include an off-track detection unit to detect off-track of the head slider, and a voltage adjusting unit to adjust a magnitude of voltage applied to the piezoelectric material layer in proportion to a degree of the off-track detected by the off-track detection unit.

Additional features and/or utilities of the present general inventive concept may be realized by a method to reduce off-track in the hard disk drive, the method including moving the head slider onto a certain track of the disk to record data into the track of the disk or to reproduce data recorded in the track, detecting the degree of off-track by using the off-track detection unit, adjusting the magnitude of voltage to be applied to the piezoelectric material layer by using the voltage adjusting unit in proportion to the degree of the off-track detected by the off-track detection unit, and applying the voltage to the piezoelectric material layer.

Additional features and/or utilities of the present general inventive concept may be realized by a hard disk drive including a disk, a magnetic head, and an actuator. The magnetic head may write to or read from the disk and may include a first side and a second side opposite the first side, the first side being closer to a center of the disk than the second side. The actuator may tilt the first side of the magnetic head closer to a surface of the disk than the second side of the magnetic head. The actuator may include at least one hinge having a piezoelectric layer located thereon to actuate the hinge. The piezoelectric layer may be located on a first surface of the hinge facing the disk.

The at least one hinge may include a first hinge and a second hinge, the first hinge located closer to a center of the disk than the second hinge, and the piezoelectric material may be located only on a first surface of the first hinge, the first surface facing a surface of the disk. Alternatively, a first layer of piezoelectric material may be located on the first surface of the first hinge, and a second layer of piezoelectric material may be located the second surface of the second hinge.

The hard disk drive may further include a base member to fixedly receive the disk and a head stack assembly thereon. The head stack assembly may include a swing arm having a first end rotatably attached to the base, the at least one hinge connected to a second end of the swing arm opposite the first end, and a suspension having a first end connected to the second end of the swing arm via the hinge and having the magnetic head mounted on a second end of the suspension opposite the first end of the suspension.

The hard disk drive may further include an off-track detection unit to detect an off track of the magnetic head and a voltage adjustment unit to adjust a voltage applied to the actuator when an off-track is detected. The hard disk drive may include a vibration detection unit to detect vibration of the disk and a voltage adjustment unit to adjust a voltage applied to the actuator when a vibration is detected. The vibration detection unit may be an off-track detection unit.

Additional features and/or utilities of the present general inventive concept may include a method to reduce off-track of a hard disk drive. The method may include tilting a magnetic head to read to or write from a disk so that a first side of the magnetic head is closer to a surface of the disk than a second side opposite the first side. The first side of the magnetic head may be closer to a center of the disk than the second side.

The method may further include detecting an off-track of the magnetic head and tilting the magnetic head when an off-track is detected. The method may include detecting a vibration of the disk and tilting the magnetic head when vibration of the disk is detected.

The magnetic head may be tilted only when a vibration is detected. The tilt angle of the magnetic head may be adjusted according to a magnitude of a detected vibration. The tilt angle of the magnetic head may be maintained at a constant angle regardless of a magnitude of detected vibration. Tilting the magnetic head may include adjusting an actuator.

The actuator may include a piezoelectric layer on a hinge, and tilting the magnetic head may include applying a voltage to the piezoelectric layer.

The actuator may include first and second hinges, and each may have a first surface facing the disk and a second surface opposite the first surface, the first hinge being closer to a center of the disk than the second hinge. Adjusting the actuator may include bending the first hinge toward the disk. A first piezoelectric layer may be located on the first surface of the first hinge, and bending the first hinge may include applying a voltage to the first piezoelectric layer.

A piezoelectric layer may be located only on the first hinge of the first and second hinges.

A second piezoelectric layer may be located on the second surface of the second hinge, and adjusting the actuator may include applying a voltage to the first and second piezoelectric layers.

A computing device may include a hard disk drive, a controller, and an interface. The hard disk drive may include a disk, a magnetic head, and an actuator. The magnetic head may write to or read from the disk, and may include a first side and a second side opposite the first side, the first side being closer to a center of the disk than the second side. The actuator may tilt the first side of the magnetic head closer to a surface of the disk than the second side of the magnetic head. The controller may control read and write operations from and to the disk, and the interface may operate the controller to perform read and write operations.

The interface may include at least one of a data transfer port, a sensory display, and a data input interface. The data input interface may include at least one of a button, a keypad, a keyboard, scroll wheel, a joystick, and a switch.

### BRIEF DESCRIPTION OF THE DRAWINGS

Exemplary embodiments of the inventive concept will be more clearly understood from the following detailed description taken in conjunction with the accompanying drawings in which:

These and/or other aspects and utilities of the present general inventive concept will become apparent and more readily appreciated from the following description of the embodiments, taken in conjunction with the accompanying drawings of which:

FIG. 1 is a diagram illustrating an off-track caused by disk vibrations;

FIG. 2 is a plan view of a hard disk drive (HDD) according to an embodiment of the present general inventive concept;

FIGS. 3 and 4 are expanded perspective views of a part of a head stack assembly (HSA) according to an embodiment of the present general inventive concept, wherein FIG. 3 is an upper side perspective view and FIG. 4 is a bottom perspective view;

FIG. 5 is a diagram illustrating an off-track reducing effect of the HSA shown in FIG. 4;

FIGS. 6A-6C illustrate a head stack assembly according to an embodiment of the present general inventive concept;

FIGS. 7A and 7B illustrate a computing device according to an embodiment of the present general inventive concept;

FIGS. 8A and 8B illustrate a head slider and a magnetic head relative to a disk according to an embodiment of the present general inventive concept; and

FIGS. 9A and 9B illustrate methods to reduce off-track according to an embodiment.

### DETAILED DESCRIPTION OF THE EMBODIMENTS

The present general inventive concept will now be described more fully with reference to the accompanying drawings, in which exemplary embodiments of the invention are shown, and wherein like reference numerals refer to like elements throughout. The inventive concept may, however, be embodied in many different forms and should not be construed as being limited to the embodiments set forth herein; rather, these embodiments are provided so that this disclosure will be thorough and complete, and will fully convey the concept of the inventive concept to those skilled in the art.

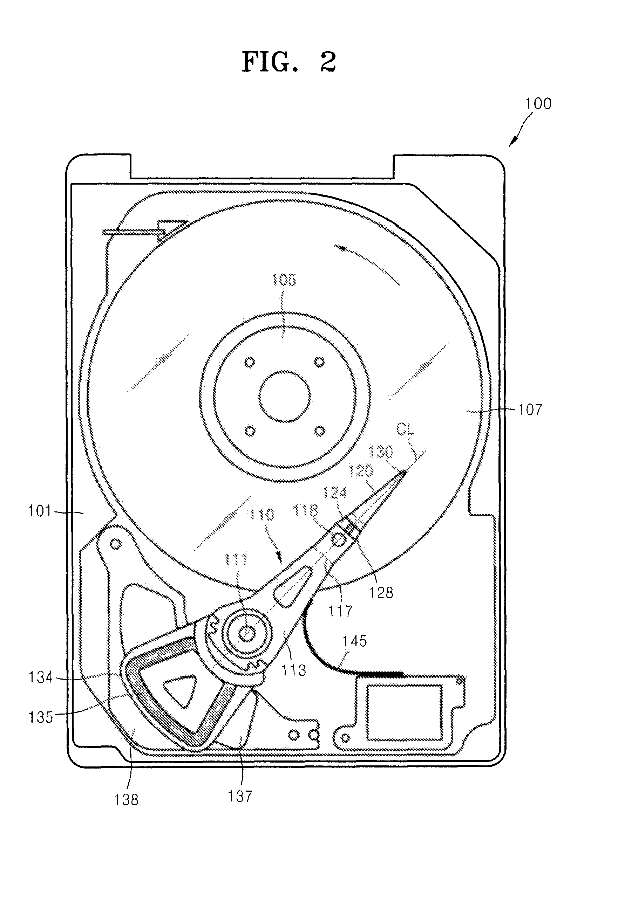

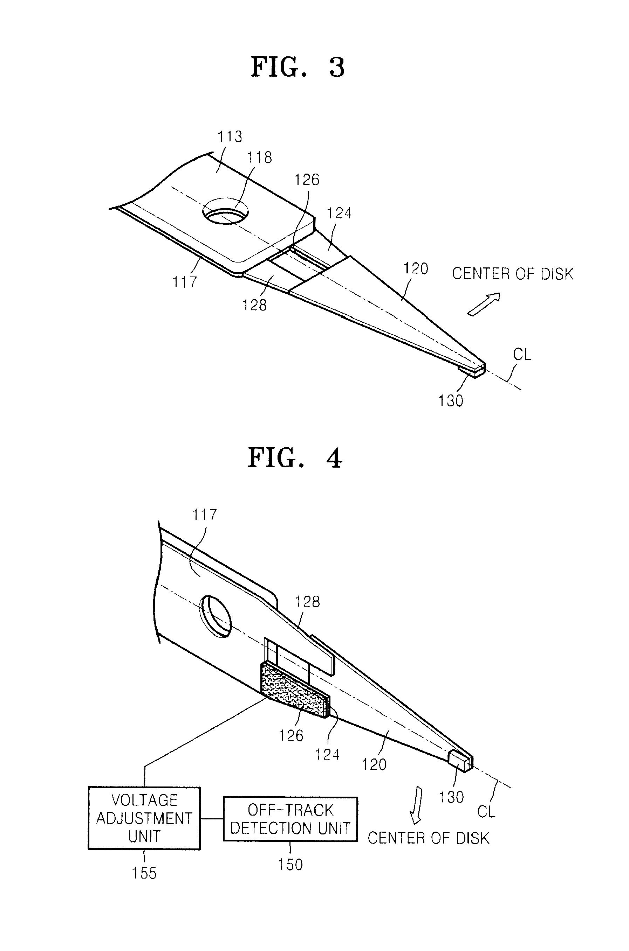

FIG. 2 is a plan view of a hard disk drive (HDD) according to an embodiment of the present inventive concept, and FIGS. 3 and 4 are expanded perspective views of a part of a head stack assembly (HSA) according to an embodiment of the present inventive concept, wherein FIG. 3 is an upper side perspective view and FIG. 4 is a bottom perspective view.

Referring to FIGS. 2 through 4, the HDD 100 includes a spindle motor 105, a disk 107 that is a data storage medium, and a head stack assembly 110 in a housing formed of a base member 101 and a cover member (not shown) coupled to the base member 101. The spindle motor 105 rotates the disk 107 at a high speed, and is mounted on the base member 101. The disk 107 is coupled to the spindle motor 105 to rotate in a direction denoted by an arrow at high speed. Due to the high speed rotation, an air flow which flows in the same direction as the direction denoted by the arrow is induced on a surface of the disk 107.

The head stack assembly 110 includes a head slider 130 having a magnetic head (not shown) to write or read data. The head slider 130 records data into the disk 107 or reproduces data recorded in the disk 107 after moving to a certain track on the disk 107. The head stack assembly 110 includes a swing arm 113 in which a pivot bearing 111 is inserted to rotate with respect to the base member 101. A connecting plate 117 is coupled to a front edge of the swing arm 113, a suspension 120 is coupled to the connecting plate 117 to vibrate finely, and the head slider 130 mounted on a front edge of the suspension 120. The suspension 120 is configured to vibrate only slightly. For example, it may absorb minute amounts of shock or vibration to prevent damage to the head stack assembly 110 and the disk 107 caused by shock or vibration. The suspension 120 is configured to that it does not vibrate so much that the head slider 130 contacts the disk 107. In addition, the head stack assembly 110 includes an overmold 134 which is coupled to the swing arm 113 and includes wound voice coil 135.

A magnet 137 and a yoke 138 supporting the magnet 137 are located on upper and lower portions of the overmold 134. The magnet 137, the yoke 138, and the voice coil 135 of the head stack assembly 110 form a voice coil motor to provide a driving force for rotating the head stack assembly 110.

When air flow induced by high speed rotation of the disk 107 passes over the surface of the disk 107 and a surface of the head slider 130, which faces the disk 107, a lifting force is applied to the head slider 130. The head slider 130 floats above the disk 107 at a height where the lifting power and the elastic compressing force of the suspension 120 which compresses the head slider 130 toward the disk 107 are balanced. While the head slider 130 floats, the magnetic head (not shown) on the head slider 130 performs the recording or reproducing function of the data with respect to the disk 107. The hard disk drive 100 further includes a flexible printed circuit (FPC) 145 which electrically connects the head stack assembly 110 to a main circuit board (not shown) located beneath the base member 101.

The connecting plate 117 is a medium to connect the front edge portion of the swing arm 113 and the suspension 120, and the front edge portion of the swing arm 113 and the connecting plate 117 may be connected to each other by a swaging operation. A swaging hole 118 may be formed in the connecting plate to perform the swaging coupling operation.

The hard disk drive 100 further includes a pair of hinges 124 and 128 which connect the connecting plate 117 to the suspension 120. The hinges 124 and 128 are respectively located on either side of a center line CL of the suspension 120. The center line CL extends in a length direction of the suspension 120, and the center line CL is a virtual straight line extending from the head slider 130 to the pivot bearing 111. The first hinge 124 is located on a side of the head stack assembly 110 that is closer to the center of the disk 107 than the center line CL, and the second hinge 128 is located on a side of the head stack assembly 110 that is farther from the center of the disk 107 than the center line CL. The first and second hinges 124 and 128 may be integrally formed with the connecting plate 117, and are coupled to the suspension 120.

Although it is not shown in the drawings, the suspension 120 may include a load beam to elastically bias the head slider 130 toward the surface of the disk 107 and a flexure supported by the load beam and attaching the head slider 130 to the surface facing the disk 107. The load beam may be coupled to the pair of hinges 124 and 128.

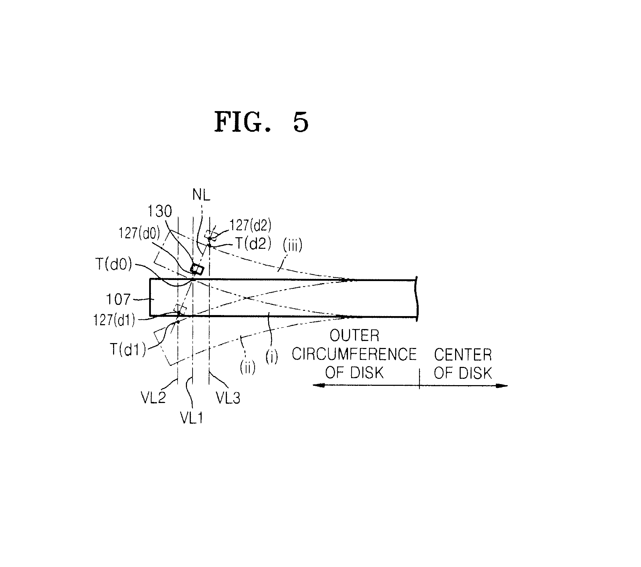

The head stack assembly 110 further includes a piezoelectric material layer 126 on the first hinge 124. According to one embodiment, the piezoelectric material layer 126 is located on only the first hinge 124 of the two hinges 124, 128. However, a piezoelectric material layer 126 may also be located on both hinges 124 and 128. The piezoelectric material layer 126 may include a piezoelectric material such as lead zirconate titanate (PZT). The piezoelectric material layer 126 may be formed by adhering a film including the piezoelectric material on the first hinge 124. When a voltage is applied to the piezoelectric material layer 126, the piezoelectric material layer 126 compresses the first hinge 124 to bend the first hinge 124 toward the surface of the disk 107. Then, the suspension 120 is twisted slightly, and the head slider 130 supported by the suspension 120 is slanted so that a side surface which is closer to the center portion of the disk 107 faces downward as shown in FIG. 5.

FIG. 5 is a diagram illustrating the off-track reducing effect of the head stack assembly shown in FIGS. 3 and 4. Referring to FIG. 5, when the disk 107 shakes, the head slider 130 shakes along a normal line NL to the surface of the head slider 130 facing the disk 107. As described above, since the head slider 130 is tilted when the voltage is applied to the piezoelectric material layer 126 (refer to FIG. 4), the normal line NL is slightly inclined with respect to vertical lines VL1, VL2, and VL3. Angles between the normal line NL and the vertical lines VL1, VL2, and VL3 are in proportion to the voltage applied to the piezoelectric material layer 126 (refer to FIG. 4).

When the disk 107 and the head slider 130 shake due to the vibrations applied to the hard disk drive 100 (refer to FIG. 2), the magnetic head 127(d0) located on the head slider 130 and a certain track T(d0) may be located on the first vertical line VL1 in a state where the disk 107 is in a horizontal mode (refer to (i) of FIG. 5). Therefore, at this time, the off-track may be 0. On the other hand, when the disk 107 is in a downward vibration mode, that is, an outer circumference is descended (refer to (ii) of FIG. 5), the magnetic head 127(d1) and the certain track T(d1) may be located on the second vertical line VL2. Although the magnetic head 127(d1) and the certain track T(d1) are not located on the first vertical line VL1, they are located on the second vertical line VL2, and accordingly, the off-track may still be 0. Also, when the disk 107 is in an upward vibration mode, that is, the outer circumference of the disk 107 is ascended (refer to (iii) of FIG. 5), the magnetic head 127(d2) and the certain track T(d2) may be located on the third vertical line VL3. Although the magnetic head 127(d1) and the certain track T(d1) are not located on the first vertical line VL1 or on the second vertical line VL2, they are located on the third vertical line VL3, and accordingly, the off-track may be 0. When comparing the case shown in FIG. 5 to the conventional head slider shown in FIG. 1, since the head slider 130 shakes along the normal line NL due to the voltage applied to the piezoelectric material layer 126, the off-track caused by disk 107 vibration may be reduced so that it is less than that of the conventional head stack assembly.

Although not shown in the drawings, the head stack assembly 110 may further include an interconnect which connects the flexible printed circuit 145 to the piezoelectric material layer 126 to apply the voltage to the piezoelectric material layer 126. Referring to FIG. 4, the hard disk drive 100 may further include an off-track detection unit 150 to detect the off-track of the head slider 130 and a voltage adjusting unit 155 to adjust the voltage applied to the piezoelectric material layer 126 in proportion to the degree of off-track detected by the off-track detection unit 150. The off-track detection unit 150 and the voltage adjusting unit 155 may be realized as electric circuits in the main circuit board (not shown) which is disposed under the base member 101 (refer to FIG. 2).

Hereinafter, a method of reducing the off-track while operating the hard disk drive will be described with reference to FIGS. 2 through 4. To record data in a certain track of the disk 107 or reproduce the data recorded in a certain track, the head stack assembly 110 is rotated to move the head slider 130 to the upper portion of the certain track. Then, the off-track detection unit 150 detects the off-track of the head slider 130. In addition, the voltage adjusting unit 155 adjusts a magnitude of the voltage that will be applied to the piezoelectric material layer 126 in proportion to the degree of off-track detected by the off-track detection unit 150. When the voltage is applied to the piezoelectric material layer 126, the head slider 130 is inclined at an appropriate inclination and shakes as shown in FIG. 5, and accordingly, the off-track may be reduced.

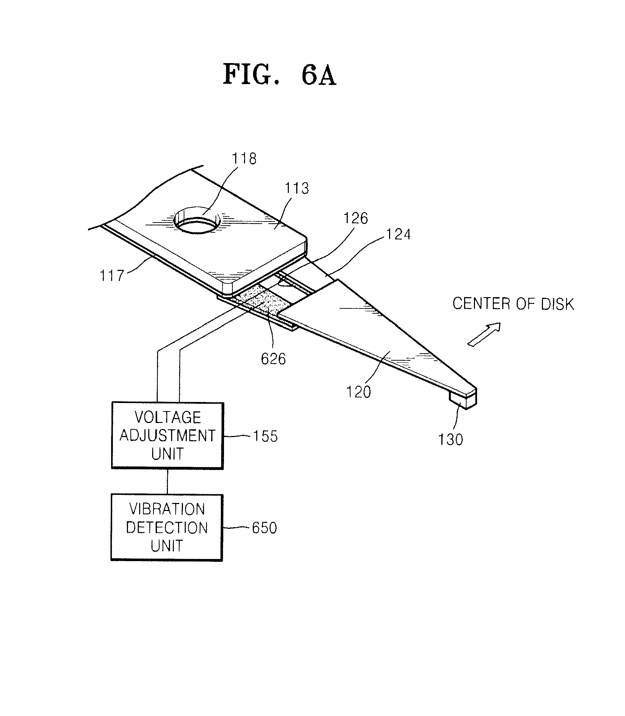

According to an embodiment illustrated in FIGS. 6A-6C, a second piezoelectric layer 626 may be located on the second hinge 628. The head stack assembly 610 illustrated in FIGS. 6A-6C is similar to the head stack assembly 110 illustrated in FIGS. 2-4, except that the second hinge 628 also has a piezoelectric layer 626 located on its surface. The piezoelectric layer 626 may be located on a surface of the hinge 628 facing away from the disk 107.

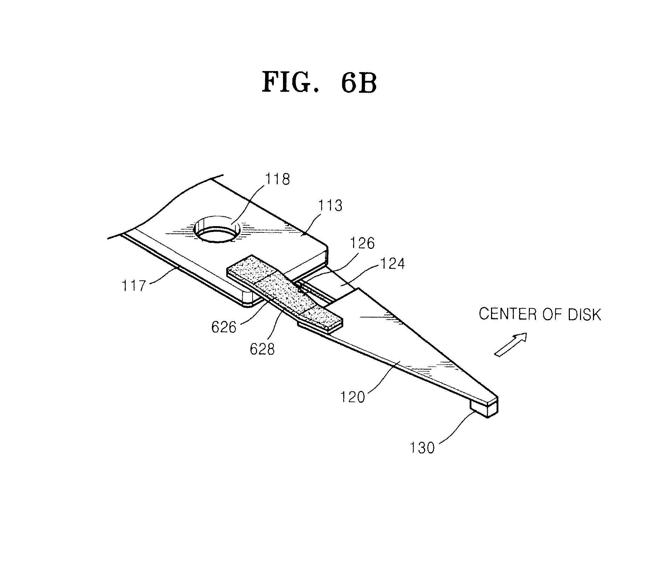

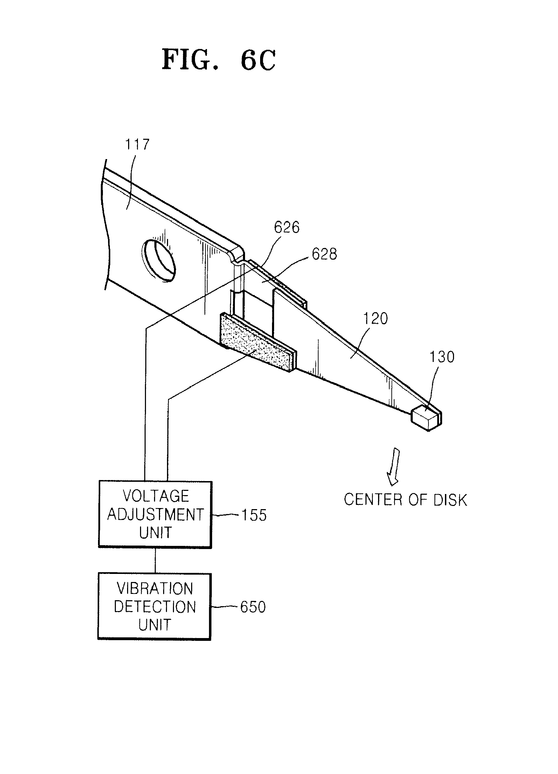

In FIG. 6A, the second hinge 628 is located adjacent to the first hinge 124, as in FIGS. 2-4. However, as shown in FIG. 6B, the second hinge 628 may be located on an opposite surface of the swing arm 113 and the suspension 120 than the first hinge 124. Alternatively, as shown in FIG. 6C, the second hinge 628 may be part of the connecting plate 117, but it may be bent so that the portion of the second hinge 628 that contacts the suspension 120 is on an opposite surface of the suspension 120 than the first hinge 124.

Also, as shown in FIGS. 6A and 6C, the piezoelectric layers 126, 626 may be activated by a voltage adjustment unit 155 that may apply a voltage when a disk vibration or a magnetic head vibration is detected by the vibration detection unit 650. The vibration detection unit 650 may detect a vibration of either the magnetic head 127 (or the head slider 130) or the disk 107, or both. The vibration may be directly sensed, or the off-track may be detected to detect vibration.

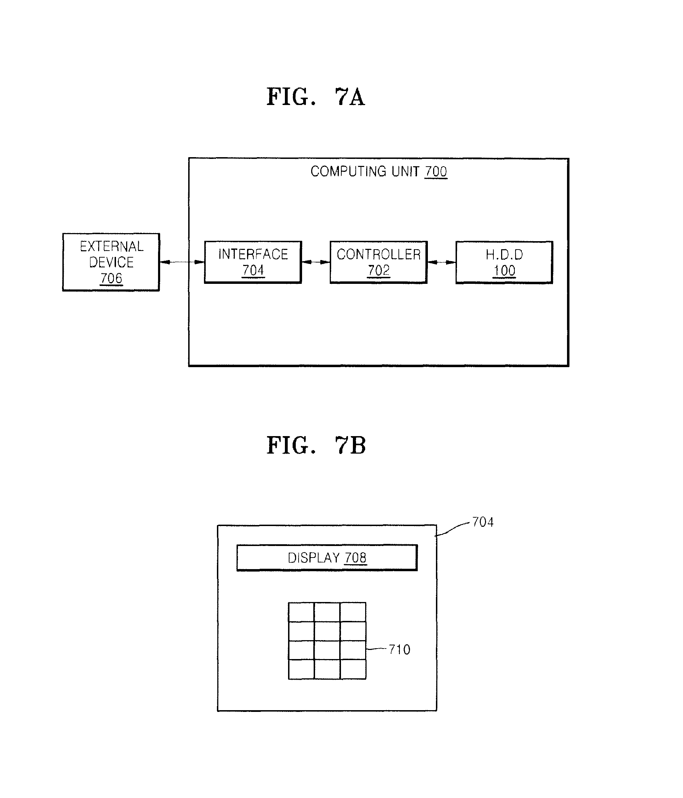

FIG. 7A illustrates a computing unit 700 including a hard disk drive 100 according to an embodiment of the present general inventive concept. The computing unit 700 may include a controller 702 to control read and write operations of the hard disk drive and an interface 704 to direct the controller 702 to access the hard disk drive 100. The interface 704 may include a data port such as a USB, Ethernet, Firewire, cable, telephone, or wireless data port, or any other port capable of transmitting data. The interface 704 may be connected to an external device 706 via the data port.

Alternatively, as shown in FIG. 7B, the interface 704 may include a sensory interface, such as a display 708 to display data from the hard disk 100 or to display options to control the controller 704. The interface 704 may also include a data input device such as a keypad 710 to allow a user to select options for reading from and/or writing to the hard disk drive 100. Other user interfaces may include light indicators, LED's, audio output devices such as speakers, a keyboard, a button, a switch, or any other means to allow a user to interact with the computing device to access the hard disk drive.

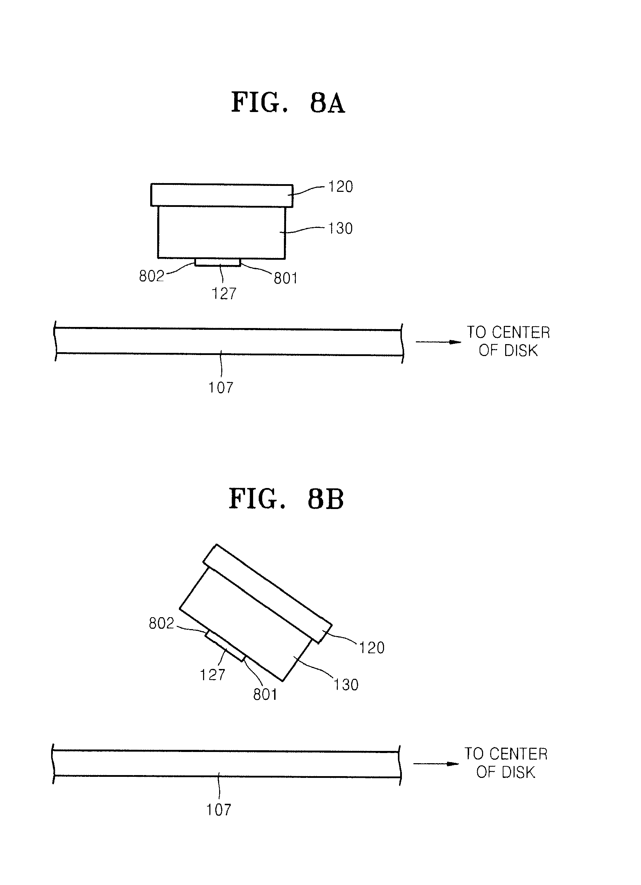

FIGS. 8A and 8B illustrate a relationship between the head slider 130, the magnetic head 127, and the disk 107. As shown in FIGS. 8A and 8B, a first side 801 of the magnetic head is closer to a center of the disk 107 than a second side 802. When the magnetic head 127 is tilted, as in FIG. 8B, the first side 801 is tilted towards the disk 107 and may be closer to the disk 107 than the second side 802, which is tilted away from the disk 107.

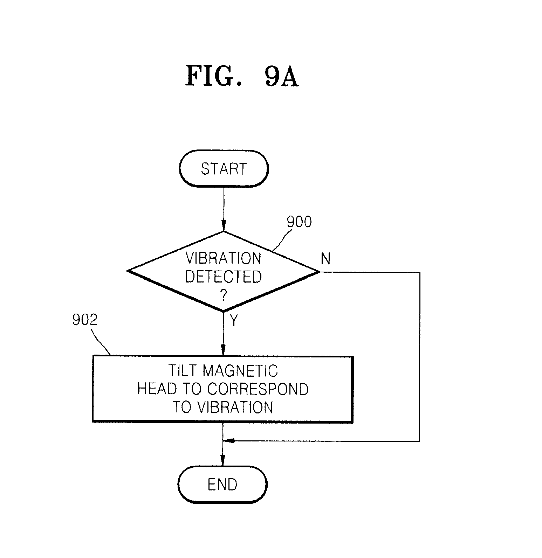

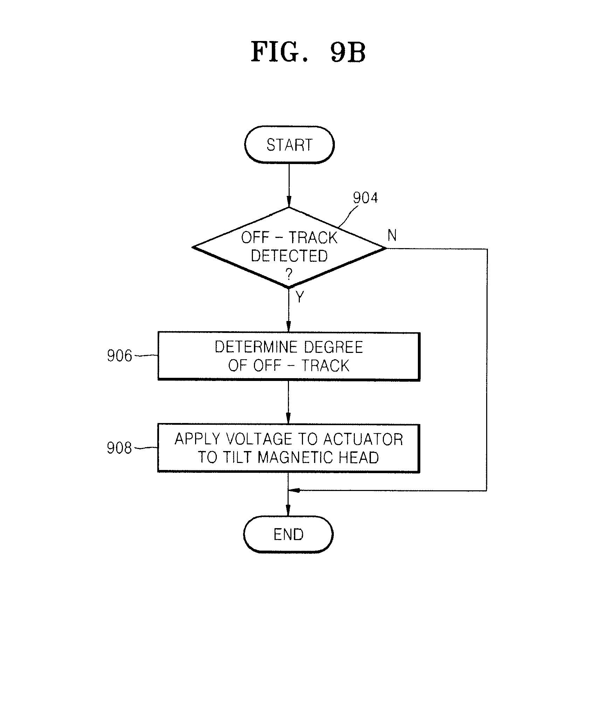

FIGS. 9A and 9B illustrate methods to reduce off-track of the hard disk drive. In FIG. 9A, a vibration of either the disk 107 or a magnetic head 127 is detected in operation 900. When the vibration is detected, the magnetic head 127 is tilted so that a side closer to the center of the disk 107 is tilted towards the disk in operation 902. In FIG. 9B, the vibration is detected by detecting an off-track in operation 904 of the magnetic head 127 relative to the disk 107. A degree of vibration may be detected by detecting a degree of off-track of the magnetic head 127 from a track on the disk 107 in operation 906. A voltage may then be applied in operation 908 to an actuator to tilt the magnetic head 127 according to the degree of off-track detected. In FIGS. 9A and 9B, when no vibration or off-track is detected, the magnetic head 127 is not tilted.

While embodiments above have described piezoelectric layers to actuate hinges, the present general inventive concept may also be described as an actuator to tilt one side of a magnetic head relative to a disk. The magnetic head may be tilted so that a side of the head slider that is closer to the center of the disk is closer to the disk surface than an opposite side of the head slider. The actuator may be electrically controlled, and may include one or more hinges. However, the actuator may be any device that is capable of being adjusted to tilt the magnetic head. The actuator may include a piezoelectric layer, or any other material that is capable of adjusting the actuator upon receiving a voltage.

The magnetic head may be tilted based on a detected vibration of the disk or magnetic head, or based on an off-track of the magnetic head from a track on the disk, or the magnetic head may be fixedly tilted.

While the inventive concept has been particularly shown and described with reference to exemplary embodiments thereof, it will be understood that various changes in form and details may be made therein without departing from the scope of the following claims.

In particular, the invention provides the following embodiments 1 to 33:
1. A head stack assembly comprising:
   a swing arm rotatably mounted on a base member of a hard disk drive;
   a connecting plate coupled to a front edge of the swing arm;
   a suspension coupled to the connecting plate;
   a pair of hinges, one located on each side of a center line of the suspension to connect the connecting plate to the suspension;
   a piezoelectric material layer including a piezoelectric material located on only a first hinge of the pair of hinges, wherein the first hinge is closer than a second hinge of the pair of hinges to a center of a disk in the hard disk drive; and
   a head slider mounted on the front edge of the suspension.
2. The head stack assembly of embodiment 1, wherein when a voltage is applied to the piezoelectric material layer, the piezoelectric material layer compresses the first hinge to bend the first hinge toward a surface of the disk.
3. The head stack assembly of embodiment 1, wherein the piezoelectric material layer is formed by adhering a film including the piezoelectric material onto the first hinge.
4. The head stack assembly of embodiment 1, wherein the piezoelectric material is lead zirconate titanate (PZT).
5. A hard disk drive comprising:
   a base member;
   a disk that is a data storage medium to rotate on the base member at a high speed; and
   a head stack assembly rotatably mounted to the base member to record data into the disk or to reproduce data stored in the disk, the head stack assembly comprising:
      a swing arm rotatably mounted on a base member of a hard disk drive;
      a connecting plate coupled to a front edge of the swing arm;
      a suspension coupled to the connecting plate;
      a pair of hinges, one located on each side of a center line of the suspension to connect the connecting plate to the suspension;
      a piezoelectric material layer including a piezoelectric material located on only a first hinge of the pair of hinges, wherein the first hinge is closer than a second hinge of the pair of hinges to a center of a disk in the hard disk drive; and
      a head slider mounted on the front edge of the suspension.
6. The HDD of embodiment 5, further comprising:
   an off-track detection unit to detect off-track of the head slider; and
   a voltage adjusting unit to adjust a magnitude of voltage applied to the piezoelectric material layer in proportion to a degree of the off-track detected by the off-track detection unit.
7. A method to reduce off-track in a hard disk drive, the method comprising:
   moving a head slider onto a certain track of a disk of the hard disk drive to record data onto the track or to reproduce data from the track;
   detecting a degree of off-track by using an off-track detection unit;
   adjusting a magnitude of voltage to be applied to the piezoelectric material layer by using a voltage adjusting unit in proportion to the degree of the off-track detected by the off-track detection unit; and
   applying the voltage to the piezoelectric material layer.
8. A hard disk drive, comprising:
   a disk;
   a magnetic head to write to or read from the disk, the magnetic head including a first side and a second side opposite the first side, the first side being closer to a center of the disk than the second side, and
   an actuator to tilt the first side of the magnetic head closer to a surface of the disk than the second side of the magnetic head.
9. The hard disk drive according to embodiment 8, wherein the actuator comprises at least one hinge having a piezoelectric layer located thereon to actuate the hinge.
10. The hard disk drive according to embodiment 9, wherein the piezoelectric layer is located on a first surface of the hinge facing the disk.
11. The hard disk drive according to embodiment 9, wherein the at least one hinge comprises a first hinge and a second hinge, the first hinge located closer to a center of the disk than the second hinge, and
   the piezoelectric material is located only on a first surface of the first hinge, the first surface facing a surface of the disk.
12. The hard disk drive according to embodiment 9, wherein the at least one hinge comprises a first hinge and a second hinge, the first hinge located closer to a center of the disk than the second hinge, each of the first and second hinges having a first surface facing the disk and a second surface opposite the first surface,
   a first layer of piezoelectric material is located on the first surface of the first hinge, and
   a second layer of piezoelectric material is located the second surface of the second hinge.
13. The hard disk drive according to embodiment 9, further comprising:
   a base member to receive the disk and a head stack assembly thereon, the head stack assembly comprising:
      a swing arm having a first end rotatably attached to the base;
      the at least one hinge connected to a second end of the swing arm opposite the first end; and
      a suspension having a first end connected to the second end of the swing arm via the hinge and having the magnetic head mounted on a second end of the suspension opposite the first end of the suspension,
   wherein the disk is rotatably attached to the base member.
14. The hard disk drive according to embodiment 13, further comprising:
   a vibration detection unit to detect vibration of the disk; and
   a voltage adjustment unit to adjust a voltage applied to the actuator when an off-track is detected.
15. The hard disk drive according to embodiment 14, wherein the vibration detection unit is an off-track detection unit to detect an off track of the magnetic head.
16. A method to reduce off-track of a hard disk drive, the method comprising:
   tilting a magnetic head to read to or write from a disk so that a first side of the magnetic head is closer to a surface of the disk than a second side opposite the first side,
      wherein the first side of the magnetic head is closer to a center of the disk than the second side.
17. The method according to embodiment 16, further comprising:
   detecting an off-track of the magnetic head and tilting the magnetic head when an off-track is detected.
18. The method according to embodiment 16, further comprising:
   detecting a vibration of the disk and tilting the magnetic head when vibration of the disk is detected.
19. The method according to embodiment 18, wherein the magnetic head is tilted only when a vibration is detected.
20. The method according to embodiment 18, wherein a tilt angle of the magnetic head is adjusted according to a magnitude of a detected vibration.
21. The method according to embodiment 18, wherein the tilt angle of the magnetic head is maintained at a constant angle regardless of a magnitude of detected vibration.
22. The method according to embodiment 16, wherein tilting the magnetic head comprises adjusting an actuator.
23. The method according to embodiment 22, wherein the actuator comprises a piezoelectric layer on a hinge, and
   tilting the magnetic head comprises applying a voltage to the piezoelectric layer.
24. The method according to embodiment 22, wherein the actuator comprises first and second hinges, each having a first surface facing the disk and a second surface opposite the first surface, the first hinge being closer to a center of the disk than the second hinge, and
   adjusting the actuator comprises bending the first hinge toward the disk.
25. The method according to embodiment 24, wherein a first piezoelectric layer is located on the first surface of the first hinge, and
   bending the first hinge comprises applying a voltage to the first piezoelectric layer.
26. The method according to embodiment 25, wherein a piezoelectric layer is located only on the first hinge of the first and second hinges.
27. The method according to embodiment 26, wherein a second piezoelectric layer is located on the second surface of the second hinge, and
   adjusting the actuator comprises applying a voltage to the first and second piezoelectric layers.
28. A computing unit, comprising:
   a hard disk drive, comprising:
      a disk,
      a magnetic head to write to or read from the disk, the magnetic head including a first side and a second side opposite the first side, the first side being closer to a center of the disk than the second side, and
      an actuator to tilt the first side of the magnetic head closer to a surface of the disk than the second side of the magnetic head;
   a controller to control read and write operations from and to the disk; and
   an interface to operate the controller to perform read and write operations.
29. The computing unit according to embodiment 28, wherein the interface includes at least one of a data transfer port, a sensory display, and a data input interface.
30. The computing unit according to embodiment 29, wherein the data input interface includes at least one of a button, a keypad, a keyboard, scroll wheel, a joystick, and a switch.
31. The computing unit according to embodiment 28, wherein the actuator comprises at least one hinge having a piezoelectric layer located thereon to actuate the hinge.
32. The computing unit according to embodiment 31, further comprising:
   a vibration detection unit to detect vibration of the disk; and
   a voltage adjustment unit to adjust a voltage applied to the piezoelectric layer when a vibration is detected.
33. The computing unit according to embodiment 31, wherein the at least one hinge comprises a first hinge and a second hinge, the first hinge located closer to a center of the disk than the second hinge, and
   the piezoelectric material is located only on a first surface of the first hinge, the first surface facing a surface of the disk.

## Claims

1. A head stack assembly (110) comprising:
a swing arm (113) rotatably mounted on a base member (101) of a hard disk drive (100);
a connecting plate (117) coupled to a front edge of the swing arm;
a suspension (120) coupled to the connecting plate;
a pair of hinges (124, 128), one located on each side of a center line of the suspension to connect the connecting plate to the suspension;
a piezoelectric material layer (126) including a piezoelectric material located on only a first hinge (124) of the pair of hinges, wherein the first hinge is closer than a second hinge of the pair of hinges to a center of a disk in the hard disk drive; and
a head slider (130) mounted on the front edge of the suspension.

2. A hard disk drive (100) comprising:
a base member (101);
a disk (107) that is a data storage medium to rotate on the base member at a high speed; and
the head stack assembly according to claim 1, rotatably mounted to the base member to record data into the disk or to reproduce data stored in the disk.

3. The HDD of claim 2, further comprising:
an off-track detection unit (150) to detect off-track of the head slider; and
a voltage adjusting unit (155) to adjust a magnitude of voltage applied to the piezoelectric material layer in proportion to a degree of the off-track detected by the off-track detection unit.

4. A method to reduce off-track in a hard disk drive, the method comprising:
moving a head slider onto a certain track of a disk of the hard disk drive to record data onto the track or to reproduce data from the track;
detecting a degree of off-track by using an off-track detection unit;
adjusting a magnitude of voltage to be applied to the piezoelectric material layer by using a voltage adjusting unit in proportion to the degree of the off-track detected by the off-track detection unit; and
applying the voltage to the piezoelectric material layer.

5. A hard disk drive (100), comprising:
a disk (107);
a magnetic head (130) to write to or read from the disk, the magnetic head including a first side and a second side opposite the first side, the first side being closer to a center of the disk than the second side, and
an actuator (124) to tilt the first side of the magnetic head closer to a surface of the disk than the second side of the magnetic head.

6. The hard disk drive according to claim 5,
wherein the actuator comprises at least one hinge (124) having a piezoelectric layer (126) located thereon to actuate the hinge and the piezoelectric layer is preferably located on a first surface of the hinge facing the disk.

7. The hard disk drive according to claim 5, wherein the at least one hinge comprises a first hinge and a second hinge, the first hinge located closer to a center of the disk than the second hinge, and
the piezoelectric material is located only on a first surface of the first hinge, the first surface facing a surface of the disk.

8. The hard disk drive according to claim 5, wherein the at least one hinge comprises a first hinge and a second hinge, the first hinge located closer to a center of the disk than the second hinge, each of the first and second hinges having a first surface facing the disk and a second surface opposite the first surface,
a first layer of piezoelectric material is located on the first surface of the first hinge, and a second layer of piezoelectric material is located the second surface of the second hinge.

9. The hard disk drive according to one of claims 6 to 8, further comprising:
a base member (101) to receive the disk and a head stack assembly (110) thereon, the head stack assembly comprising:
a swing arm (113) having a first end rotatably attached to the base;
the at least one hinge connected to a second end of the swing arm opposite the first end; and
a suspension (120) having a first end connected to the second end of the swing arm via the hinge and having the magnetic head (130) mounted on a second end of the suspension opposite the first end of the suspension,
wherein the disk is rotatably attached to the base member.

10. The hard disk drive according to claim 9, further comprising:
a vibration detection unit (650) to detect vibration of the disk; and
a voltage adjustment unit (155) to adjust a voltage applied to the actuator when a vibration is detected,
wherein the vibration detection unit preferably is an off-track detection unit to detect an off track of the magnetic head.

11. A method to reduce off-track of a hard disk drive, the method comprising:
tilting a magnetic head to read to or write from a disk so that a first side of the magnetic head is closer to a surface of the disk than a second side opposite the first side,
wherein the first side of the magnetic head is closer to a center of the disk than the second side.

12. The method according to claim 11, further comprising:
detecting a vibration of the disk and tilting the magnetic head when vibration of the disk is detected.

13. The method according to claim 12, wherein the magnetic head is tilted only when a vibration is detected.

14. The method according to claim 12 or 13, wherein a tilt angle of the magnetic head is adjusted according to a magnitude of a detected vibration, or wherein the tilt angle of the magnetic head is maintained at a constant angle regardless of a magnitude of detected vibration.

15. A computing unit, comprising:
a hard disk drive according to one claims 5 to 10;
a controller (702) to control read and write operations from and to the disk; and
an interface (704) to operate the controller to perform read and write operations.
